# EUROPEAN PATENT APPLICATION

(11) **EP 4 684 634 A2**
(43) Date of publication of application: **28.01.2026**
(21) Application number: 25185493.1
(22) Date of filing: 26.06.2025
(51) Int. Cl.: A01K 1/03, F16B 37/04

(54) **VETERINARY ENVIRONMENT CONTROL SYSTEM**

(30) Priority: 27.06.2024 GB 202409273
(71) Applicant: CASCO Europe Limited, Horsham, West Sussex RH12 3JR (GB)
(72) Inventor: BUBEAR, Matthew, Horsham, RH12 3JR (GB)
(74) Representative: Windsor, Louise

(57) **Abstract**

A removable veterinary environment control system (1) for a veterinary enclosure for an animal comprising one or more of: at least one heating means (19); at least one heating control (17) for controlling the temperature within an animal housing; at least one lighting means (7); at least one lighting control (13) for controlling the light emitted within an animal housing; at least one ventilation means (25); and at least one ventilation control (23) for controlling the ventilation within an animal housing; wherein the removable veterinary environmental control system (1) comprises a self-contained panel comprising at least one removable connector (61) to connect the system (1) to a veterinary enclosure and a power input (70) to receive power to the panel and electrical components contained therein.

## Description

The present invention relates to an environmental control system for a veterinary enclosure.

It is common in veterinary practices or veterinary hospitals for small mammals, such as cats; dogs; rodents including rats, mice, gerbils, guinea pigs and other small mammals such as rabbits and hedgehogs to be kept in enclosures when they are being treated or recovering from treatment. Known enclosures usually comprise metal cages arranged in a stack or bank. Each cage has a mesh door that allows air to flow into the cage and allows the animal to be seen. For animal use, such metal cages are hardwearing, and the mesh door allows a user to attach a clipboard to the mesh; for example, to record patient medical records. The mesh door also allows the veterinary practitioner to pass intravenous therapy (IV) equipment through the mesh if this is required to treat the animal. For example, if an animal patient is receiving IV therapy, a bag of intravenous fluid hangs from a hook that is supported on a wheeled stand or tripod outside of the cage and the IV tubing/line passes from the bag through the mesh of the cage door to the animal patient.

Recent improvements in veterinary care have identified the need to carefully control the environment in which animals are housed; particularly when the animal patient is recovering from treatment. Further, the needs of each animal patient may differ and so controlling the environment of the veterinary facility; i.e. the ward or room, is not sufficient to meet the needs of each individual animal. It is important to control heating, lighting, and ventilation with a bespoke plan for each animal's needs and for the environmental conditions within each enclosure to be independently controllable.

However, although it is known that whilst toughened glass enclosures are preferable to maintain hygiene standards, allow visibility of the animal and aid animal recovery, metal cages remain the predominant animal enclosure in use in veterinary hospitals and practices. Although cages are durable, they have been found to be heavy, noisy and to block light. This is problematic when the cages are stacked, and particularly when a significant number of animals are housed in multiple stacked cages. A recent survey found that 88% of veterinary professionals work with stainless steel cages and that challenges with such cages include excessive noise, difficulty with temperature/heating, difficulties in cleaning; minimal space available and poor aesthetic appearance. The impact of these challenges on the workplace and treatment provided include animal patient anxiety, staff stress, cross-contamination, and animal injury.

Recent improvements in veterinary enclosures provide toughened glass enclosures with integrated heating, such as heat mats at the base of the enclosure, lighting, such as LED strips within the body of the enclosure and ventilation means, such as fans used to pull air out of the housing and into an exhaust system. However, this requires significant investment by a veterinary practice to upgrade and entirely replace the traditional metal cage/s, which a practice may prefer for durability. Further, to achieve the desired integrated heating, lighting and ventilation, a veterinary practice is required to replace the entire enclosure and ensure that multiple power sources can be connected to the enclosures where they are positioned in the veterinary practice.

Furthermore, there remains a problem of veterinary accessories, such as clipboards with patient notes or IV lines obscuring the door to the enclosure. If the animal feels trapped in the enclosure because they are unable to see out of the enclosure door, or accessories prevent light entering the enclosure then this can increase animal anxiety and so be detrimental to recovery. Furthermore, in the event of an emergency any obstructions preventing access to the animal through the door of the enclosure can delay treatment when time is critical. It is also known that having patient-specific information, such as animal identifiers or treatment notes attached by temporary means increases the chance of human error, including the risk of mis-identifying animals or mistakes in the treatment provided. Present apparatus having patient notes and treatment accessories clipped or fed through cage doors, increase the risk that the animal's treatment is not at the required standard. There is a need to ensure the accuracy of identification and treatment of the animal patient.

The present invention sets out to provide an improved veterinary environment control system, which addresses the above-described problems.

In a first aspect, the invention provides a removable veterinary environment control system for a veterinary enclosure for an animal comprising one or more of:
- at least one heating means;
- at least one heating control for controlling the temperature within an animal housing;
- at least one lighting means;
- at least one lighting control for controlling the light emitted within an animal housing;
- at least one ventilation means; and
- at least one ventilation control for controlling the ventilation within an animal housing;
wherein the removable veterinary environmental control system comprises a self-contained panel comprising at least one removable connector to connect the system to a veterinary enclosure and a power input to receive power to the panel and electrical components contained therein.

In a second aspect, the invention provides a removable veterinary environment control system for a veterinary enclosure for an animal comprising:
- at least one heating means and at least one heating control for controlling the temperature within an animal housing;
wherein the removable veterinary environmental control system comprises a self-contained panel comprising at least one removable connector to connect the system to a veterinary enclosure and a power input to receive power to the panel and electrical components contained therein.

In a third aspect, the invention provides a removable veterinary environment control system for a veterinary enclosure for an animal comprising:
- at least one lighting means and at least one lighting control for controlling the light emitted within an animal housing;
wherein the removable veterinary environmental control system comprises a self-contained panel comprising at least one removable connector to connect the system to a veterinary enclosure and a power input to receive power to the panel and electrical components contained therein.

In a fourth aspect, the invention provides a removable veterinary environment control system for a veterinary enclosure for an animal comprising:
- at least one ventilation means; and at least one ventilation control for controlling the ventilation within an animal housing;
wherein the removable veterinary environmental control system comprises a self-contained panel comprising at least one removable connector to connect the system to a veterinary enclosure and a power input to receive power to the panel and electrical components contained therein.

In the context of this invention, it is understood that "self-contained" refers to the device being complete in itself and "panel" is understood to be a mounting means for components. The present invention allows the advantages of both providing and controlling heat, and/or lighting, and/or ventilation without the requirement to entirely replace an animal enclosure. The veterinary environment control system can be installed/retrofitted to a previously manufactured enclosure or cage. Thus, a practitioner can upgrade each animal enclosure to allow for individual, independent control of the veterinary environment with the convenience of a "plug and play" installation.

The present invention allows for conditions within each individual housing of a veterinary enclosure system to be controlled separately by use of the removable veterinary environment control system only. In larger veterinary practices there may be a significant number of animal patients each with different recovery requirements or at different stages of treatment. The present invention allows a veterinary practitioner to provide the best conditions for treatment and recovery according to the needs of each patient.

It has been found that the bespoke control of environmental conditions within an animal enclosure leads to improved clinical outcomes, not least because the animal patient is more comfortable, calmer, and less stressed. The present invention provides the means for a veterinary practitioner to personalise patient care; in some embodiments, through automation. The installation of the device is also convenient and does not require additional technical expertise so that an existing enclosure or cage can be upgraded with very little downtime.

Furthermore, the present invention has an environmental and economic benefit to the veterinary practitioner by allowing a reduction in energy use for heating, lighting, and ventilation. The self-contained removable veterinary environment control system allows a user to only provide heat, light and ventilation to a housing/s that are in use. In large practices, rather than heating, lighting, and ventilating an entire ward/stack of enclosures when the ward is not fully occupied, a user can select only to heat, light and ventilate the required individual animal housings by using the respective veterinary environment control system for the required housing/s.

Preferably, the or each heating means comprises a heat plate; more preferably, a ceramic heat plate.

Preferably, the or each ceramic plate is set to heat to a pre-determined temperature.

Optionally, the or each heating means comprises at least one infra-red heat lamp.

Optionally, the or each infra-red heat lamp is thermostatically controlled.

Optionally, the or each ceramic heat plate is thermostatically controlled.

Optionally, the veterinary environment control system comprises at least one thermostatic sensor.

Optionally, the or each thermostatic sensor is centrally positioned along the length of the self-contained panel.

A thermostatic sensor is used to monitor the internal temperature of the housing to which the veterinary environment control system is attached.

Preferably, the or each lighting means comprises a plurality of LEDs.

Preferably, the or each lighting means comprises an array of LEDs.

Preferably, the or each lighting means comprises a diffused, adjustable reflective uplighting array of LEDs.

Preferably, the or each lighting means further comprises a movement mechanism for adjustment of the angle of emission of the or each lighting means.

Preferably, the movement mechanism is rotatable.

The movement mechanism of the present invention allows for the adjustment of the angle of emission of radiation emitted from the LED lighting means. Thus, the array can be moved to ensure that the optimum lighting is achieved for the particular enclosure and/or for the particular animal to be housed within the enclosure.

Preferably, the or each lighting control includes a power switch and/or a light intensity/dimmer control.

Preferably, the plurality of LEDs comprises at least one white light LED-emitter; at least one blue light LED-emitter; and at least one red light LED-emitter.

The veterinary environment control system of the present invention is configured to support the circadian rhythm of the animal such that a white light LED-emitter can be switched on during daylight hours and a red light LED-emitter is switched on to allow the animal to be monitored or inspected without using the white light LED-emitter, and a blue light LED-emitter is configured to highlight organic waste.

Preferably, the or each white light LED-emitter emits radiation in the wavelength range of about 420nm to about 750nm.

Preferably, the or each blue light LED-emitter emits radiation in the wavelength range of about 430nm to about 450nm.

Preferably, the or each red light LED-emitter emits radiation in the wavelength range of about 622nm to about 780nm.

Within this specification, the term "about" means plus or minus 20%; more preferably, plus or minus 10%; even more preferably, plus or minus 5%; most preferably, plus or minus 2%.

Preferably, the plurality of LEDs comprises a plurality of white light LED-emitters; a plurality of blue light LED-emitters; and a plurality of red light LED-emitters.

The veterinary lighting apparatus of the present invention significantly improves the recovery of the animal patient by assisting in the maintenance of a clean and secure animal housing that aids patient recovery. White light allows for visibility so that the animal can see the surrounding environment and the veterinary practitioner can monitor the animal. White light helps to regulate the circadian rhythm of the animal when natural daylight is not available by supporting the production of cortisol to keep the animal awake and alert during normal. By allowing the animal patient to have clear visibility in daylight, patient anxiety is reduced.

Red light allows the veterinary practitioner to view the animal patient in recovery without disturbing the animal. Red light in the wavelength selected is not visible to cats, dogs, and other small mammal species, whilst being fully visible to the human eye allowing for clear observation of the animal in recovery. The veterinary practitioner can opt to allow the animal patient to have more rest; for example, after a surgical procedure or treatment, by relying on the red light to monitor the patient without use of bright lighting that would interfere with production of melatonin, which is important in regulation of sleep and circadian rhythm. The red light used is not for treatment of the patient but to allow for inspection without disturbing the animal patient.

The blue light emitted from the veterinary environment control system highlights light organic waste within a veterinary housing to which the control system is fixed to allow for any necessary deep cleaning and sterilisation. This reduces the labour necessary to maintain the sterile environment that is essential to the animal patient's recovery because the blue light will highlight areas that would not be visible to the human eye in daylight. Greater visibility of any waste or contaminants improves the biosecurity and avoids the risk of cross-contamination if more than one animal is housed in the housing or if there are adjacent animal housings. This is particularly important to prevent the spread of contagious diseases. The wavelength of the blue light is harmless to the eyes of both the veterinary practitioner and the animal patient.

Preferably, the or each ventilation means comprises at least one fan.

Preferably, the or each fan is configured to extract and blow air.

By controlling the direction of air flow and the speed of air flow, the present invention allows for careful control of both heating and ventilation within an animal enclosure.

Preferably, the or each ventilation means further comprises at least one safety grill.

Preferably, the or each ventilation means comprises at least two safety grills attached thereto; more preferably, a front safety grill and a rear safety grill.

The or each fan provided within the veterinary environment control system ensures optimum air extraction from the animal enclosure to which the system is attached and also optimum air circulation. This aids the comfort and safety of the animal patient housed within the enclosure. A pair of safety grills ensures that access to the fan is restricted both at the front and rear face of the fan.

Preferably, the veterinary environment control system comprises at least one loudspeaker. Preferably, the veterinary environment control system comprises at least one microphone.

Preferably, the veterinary environment control system comprises at least one front-facing microphone.

Preferably, the veterinary environment control system comprises at least one rear-facing microphone.

It is understood that in the context of this invention, "front-facing" refers to the front of the device, which in use will be external to an animal housing attached thereto. "Rear-facing" is the opposing direction to the rear of the device, which in use will be internal to an animal housing attached thereto.

Preferably, the veterinary environment control system comprises a trigger to emit sound from the speaker when sound detected by the front-facing microphone exceeds about 50 decibels.

Preferably, the veterinary environment control system comprises a trigger to emit sound from the speaker when sound detected by the rear-facing microphone exceeds about 20 decibels.

In a further aspect, the present invention provides a control system for a veterinary enclosure comprising:
at least one front-facing microphone to detect sounds levels outside of a veterinary enclosure;
at least one rear-facing microphone to detect sounds levels inside of a veterinary enclosure;
at least one speaker having a trigger, wherein the trigger is activated to emit sound from the speaker in response to the sound level detected at the or each front-facing microphone and/or at the or each rear-facing microphone.

Preferably, the trigger is activated to emit sound from the speaker when sound detected by the front-facing microphone exceeds about 50 decibels.

Preferably, the trigger is activated to emit sound from the speaker when sound detected by the rear-facing microphone exceeds about 20 decibels.

In the context of the present invention, a trigger is understood to be a means to initiate sound-emission.

It has been found that stainless steel kennels are excessively noisy, and this can significantly increase an animal's levels of fear, stress and anxiety. These are all factors that can hinder the recovery of an animal patient. For example, a dog's bark can easily reach levels of 80-100 decibels, which then resonates through the kennel and so through the veterinary practice causing disruption and potentially damaging hearing. The activation of calming sounds or music has been found to calm the patient and also provide a calmer working environment.

By detecting sounds from within the enclosure, a veterinary practitioner may derive that the animal patient is restless because they are emitting loud noises or are moving excessively. In response, soothing music or sounds can be played into the enclosure through the speaker to foster security and calm the animal patient.

Automatic playback triggered by external noise levels (detected by the front-facing microphone) is in addition or as an alternative to automatic playback triggered by internal noise levels (detected by the internal, rear-facing microphone).

The microphone of the present invention provides feedback on the animal contained within the housing. For example, the microphone can be used to detect sounds caused by animal movement; for example, if the animal is restless then the sounds detected by the microphone will allow a veterinary practitioner to react accordingly. For example, in response to sounds detected at the microphone, a user could activate any of the other components of the veterinary environment control system to adjust lighting, heating, ventilation or sound/music emitted from the loudspeaker to best improve conditions for the animal patient.

Preferably, the or each loudspeaker comprises Bluetooth (RTM) connectivity.

Preferably, the or each loudspeaker comprises a timer.

By providing a timer, sound played through the loudspeaker can be controlled according to the needs of the animal patient. For example, the veterinary environment control system can use the loudspeaker to play ambient music at a pre-determined time to wake up the animal patient.

Preferably, the or each removable connector comprises a clamp; more preferably, a slidable or a rotatable clamp.

Preferably, the or each removable connector comprises a mounting bracket having at least one receiving channel. More preferably, the or each removable connector comprises a mounting bracket having at least one receiving channel for receiving a slidable clamp.

Preferably, the or removable connector comprises an I-shaped mounting bracket. More preferably, the removable connector comprises a mounting bracket having a first longitudinal channel, a transverse base channel and a transverse upper channel.

Preferably, the or each removable connector comprises a clamp rotatable through 360 degrees.

Preferably, the or each removable connector comprises at least one curved surface. Optionally, the or each removable connector comprises at least one arched member.

Preferably, the or each arched member is resilient; more preferably, resiliently biased to a closed position.

Preferably, the veterinary environment control system further comprises at least one power outlet.

The present invention allows for the connection of external devices; for example, mobile phones or tablets can be charged by connection to the veterinary environment control system.

Preferably, the veterinary environment control system further comprises at least one power outlet, preferably wherein the power outlet comprises a removable rubber cover.

Preferably, the self-contained panel comprises a plastic case, preferably an injection moulded, high density, plastic case.

The self-contained panel is well-suited for use in a clinical veterinary environment because the case is splash-resistant and is also durable and easy to clean.

The system improves conditions for animal recovery and improves safety by optimising the environment for recovery and treatment.

Preferably, the veterinary environment control system further comprises at least one recess and at least one attachment member for attaching a veterinary accessory.

Preferably, the at least one attachment member is removably fixed to the removable veterinary environment control system.

The veterinary environment control system improves the working environment for clinical staff/veterinary practitioners. By providing an attachment member/s for securing a veterinary accessory the system improves the efficiency and safety of treatment. Any accessories are securely held and positioned predominantly away from the door of the veterinary enclosure, which reduces the risk of the animal patient's view being obstructed. It has been found that small mammals, such as dogs and cats can have increased anxiety when they cannot see their surroundings. Most importantly, in the event of an emergency the attachment member/s of the present invention ensures that quick and efficient access can be achieved without any accessories or fixing means blocking the opening to the inside of the enclosure. The present invention allows the door to be quickly, conveniently, and safely opened, without accessories needing to first be detached and removed.

Preferably, the or each attachment member comprises at least one hook.

Preferably, the veterinary environment control system further comprises a blackout curtain.

If required, a blackout curtain can be attached to a hook or pair of hooks on the veterinary environment control system to hang over the front opening of a housing to which the system is attached. A blackout curtain is used to encourage an animal patient to relax or sleep or to reduce anxiety if the animal is over-stimulated.

Preferably, the removable veterinary environment control system further comprises a plurality of attachment members. More preferably, the removable veterinary environment control system comprises at least two hooks.

Preferably, the or each hook is removably attached to the removable veterinary environment control system.

Preferably, the veterinary environment control system comprises at least one wipe-clean board.

More preferably, the or each wipe-clean board further comprises a light; most preferably, the or each wipe-clean board is back-lit.

By providing a wipe clean board for a practitioner to record information, the present invention allows for medical notes and instructions to be clearly visible and associated with a respective housing. This avoids the need for clipboards/notes to be attached to obscure the opening to the housing. By recording information directly on the enclosure, the risk of errors in treatment is also reduced and so the risk of malpractice is reduced; for example, when instructions are missed or misplaced. By illuminating the board for displaying patient information, notes can be recorded and viewed even in low light conditions reducing any disturbance to the animal patient/s housed in the enclosure. It has also been found that accurate identification of patients and improved convenience of note taking improves profitability of veterinary practices and reduces workplace stress.

Preferably, the veterinary environment control system further comprises a holder for a mobile computing device.

By providing a holder for a mobile computing device such as a smartphone, tablet or other handheld device, the control system can allow a user to conveniently store patient information on the enclosure in which the animal patient is housed. This reduces the risk of human error in identification of patients and also allows for quick and convenient access to patient information.

Preferably, the holder for a mobile computing device further comprises a data connection.

By providing a data connection, information can be input to and output from the mobile computing device connected to the veterinary environment control system.

Preferably, the removable veterinary environment control system further comprises a transparent sheet, preferably a sheet of toughened safety glass, preferably wherein the sheet comprises at least one connector to attach the sheet to the front of a veterinary enclosure.

Preferably, the sheet, for example a toughened safety glass sheet, has a thickness of between about 6mm and 10mm; more preferably, the sheet, for example a toughened safety glass sheet, has a thickness of about 8mm.

The sheet can be retro-fitted to function as the front-facing door to a steel cage and is significantly quieter than traditional stainless-steel cage doors. This improves the working environment for veterinary practitioners and also aids animal recovery. Furthermore, the toughened safety glass, front-facing door can be conveniently cleaned to provide a hygienic environment for animal treatment and recovery. The toughened safety glass is also strong and secure enough to allow enclosures/cages to be stacked so that even with a stack of units and animals contained therein the system is stable and secure.

Preferably, the sheet comprises at least one cover layer; preferably, at least one translucent cover layer; more preferably, a vinyl cover layer.

By applying a vinyl cover layer that diffuses light entering the housing, the environment for an animal housed within the housing is calmer and so recovery is improved.

It is understood that in the context of this invention the "height" of the housing is the dimension perpendicular to the floor and parallel to the walls of the treatment room; the "depth" of the housing is the dimension between the door of the enclosure and the rear wall of the enclosure; the "width" of the housing is the horizontal measurement perpendicular to the depth.

Preferably, the sheet comprises a plurality of ventilation apertures.

Preferably, the sheet comprises between about eight and sixteen ventilation apertures. More preferably, the sheet comprises about twelve ventilation apertures.

In a fifth aspect, the invention provides a removable connector comprising:
at least one bracket having channels therein;
at least one slidable clamp positioned with a channel of a bracket;
wherein the slidable clamp is slidable along a channel in the bracket; and
wherein the slidable clamp is rotatable.

Preferably, the removable connector is for a securing a veterinary environment control system to the bars of a veterinary enclosure for an animal.

Preferably, the slidable clamp is rotatable around a pivot. Preferably, the pivot comprises a threaded screw.

Preferably, the slidable clamp comprises a pair of plates held together by the threaded screw. Preferably, the slidable clamp comprises a first outward facing plate and a second back plate positioned in a channel of the bracket.

Preferably, the threaded screw passes through the outward facing plate. Preferably, the threaded screw is receivable in a recess in the second back plate.

Preferably, the or each removable connector comprises a clamp rotatable through 360 degrees.

Preferably, the or each clamp comprises at least one curved surface. Optionally, the or each clamp comprises at least one arched member.

Preferably, the or each arched member is resilient; more preferably, resiliently biased to a closed position.

Preferably, the removable veterinary environment control system for a veterinary enclosure for an animal as described above further comprises the removable connector.

The removable connector for the veterinary environment control system allows for plug and play functionality, whereby the veterinary environment control system can be quickly, safely, and conveniently attached to the bars of an existing cage. No specialist knowledge or equipment is required to connect the control system because the removable connector is adjustable.

Preferably, the veterinary environment control system comprises at least one data input means. More preferably, the veterinary environment control system comprises at least one MicroSD card slot. Preferably, the or each MicroSD card slot comprises a rubber cover.

The veterinary environment control system allows for data to be input to control the output from the system. For example, a MicroSD card can be inserted into a MicroSD card slot to play music through the speaker. A user is able to select the music to be played to suit the animal housed in the enclosure.

Preferably, the veterinary environment control system comprises at least one monitoring camera.

By providing a monitoring camera/s on the control system, a user is able to remotely monitor an animal patient housed within the enclosure. The monitoring camera is carefully positioned to face inwardly into the enclosure to monitor animal movement.

Preferably, the at least one monitoring camera further comprises at least one alarm.

The monitoring camera can be used to monitor and record movement within the animal enclosure to which the control system is attached and can be used to emit an alarm, for example, a sound or light alarm, when movement is detected. Such an alarm can be used by the veterinary practitioner to indicate that an animal patient has woken from anaesthesia - i.e. that there has been an increase in movement or to indicate that there has been a significant reduction in movement that may suggest the animal is unwell.

It is understood that in alternative embodiments of the present invention, the monitoring camera and/or the veterinary environment control system further comprises a movement tracking module.

By tracking movement of the animal patient, the present invention can use artificial intelligence to detect an animal and monitor movement. Movement tracking data can then be used to determine changes to be applied to the veterinary environment control system via the heating control, lighting control, ventilation control and/or the loudspeaker. It is further understood that data from the movement tracking module can be combined and analysed with data collected from other sensors; for example a thermostatic sensor, and/or the microphone to assist the veterinary practitioner in identifying changes in animal behaviour and to react to any changes both through manual input or automatic control of the veterinary environment control system.

In a further aspect the present invention provides a veterinary environment control method comprising the steps of:
receiving and analysing data from sensors positioned in a veterinary enclosure for an animal;
identifying changes in sound and/or lighting and/or air flow within the veterinary enclosure;
reporting changes and recommending a solution to an automated veterinary environment control system for supply of any one or more of heating and/or lighting and/or ventilation to the veterinary enclosure.

Optionally, the method further comprises the step of identifying changes in temperature.

The method of the present invention is a significant improvement in managing conditions within a veterinary enclosure. By using an AI system to identify changes based on sensor data then the response to an animal patient's needs can be rapidly and accurately delivered.

It is understood that the "veterinary" enclosure of the present invention is beneficial for use by veterinary practitioners treating animals, but the present invention can also be used by pet owners who are caring for animal patients.

Preferably, reference herein to an "animal" means a small mammal and/or a rodent. As such, in particularly preferred example, the invention provides a removable veterinary environment control system for a veterinary enclosure for a small mammal and/or a rodent. Preferably, the present invention is for use with domestic animals.

Preferably, reference herein to an "animal" means reference to a cat, dog, rabbit, or guinea pig.

It will be appreciated that reference to "one or more" includes reference to "a plurality."

Preferably, reference to "one or more" means "all."

For the purposes of clarity and a concise description, features are described herein as part of the same or separate embodiments; however, it will be appreciated that the scope of the invention may include embodiments having combinations of all or some of the features described.

The invention will now be described by way of example with reference to the accompanying drawings, in which: -
Figure 1a is a rear perspective view of a veterinary environment control system in accordance with a first embodiment of the present invention;
Figure 1b is an enlarged view of the ceramic heat plate and fan shown in Figure 1a;
Figure 2 is a front view of a veterinary environment control system in accordance with a first embodiment of the present invention;
Figure 3 is a rear view of a veterinary environment control system in accordance with a first embodiment of the present invention;
Figure 4 is a view from below of the veterinary environment control system shown in Figures 1 to 3;
Figure 5a is a perspective view of the removable connector of the veterinary environment control system in accordance with a first embodiment of the present invention;
Figure 5b is an enlarged view of the clamp of the removable connector shown in Figure 5a;
Figure 6 is a rear enlarged view showing the removable connector of the veterinary environment control system in use attached to a metal cage;
Figure 7 is a rear view of the veterinary environment control system shown in Figure 3, in use, attached to a front door of a metal cage;
Figure 8 is a front view of a veterinary environment control system in accordance with a second embodiment of the present invention;
Figure 9a is a rear view of a veterinary environment control system in accordance with a second embodiment of the present invention;
Figure 9b is a schematic side view of a veterinary environment control system in accordance with a second embodiment of the present invention;
Figure 10 is a front view of a veterinary environment control system in accordance with a further embodiment of the present invention having a replacement toughened safety glass front door and a backlit whiteboard; and
Figure 11 is a front view of a veterinary environment control system in accordance with a further embodiment of the present invention having a replacement toughened safety glass front door and a display screen.

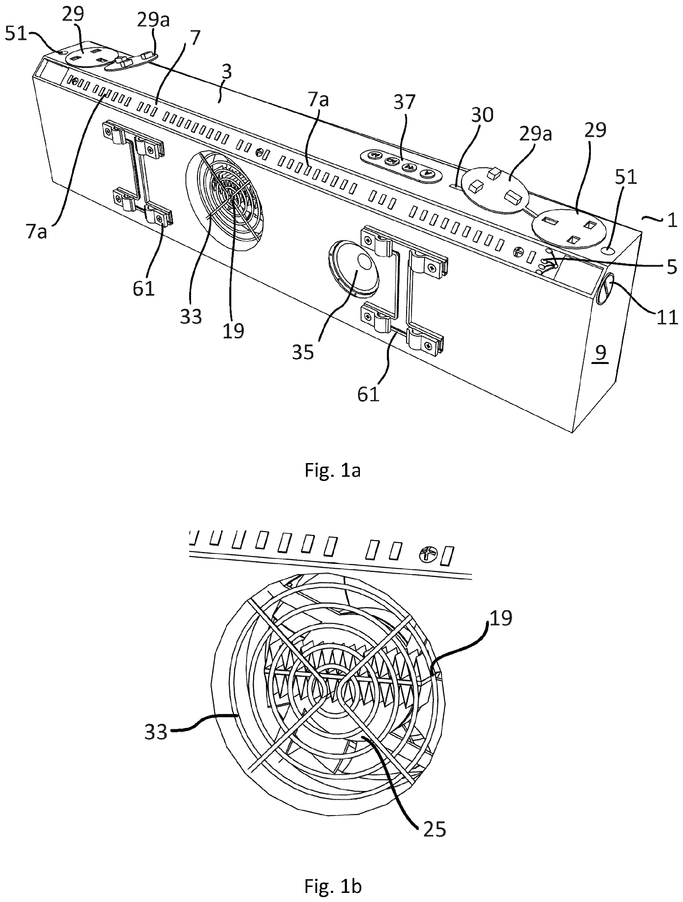

Referring to Figure 1, a rear perspective view of the veterinary environment control system 1 is shown. That is, in use the veterinary environment control system faces into an animal housing (not shown). The veterinary environment control system 1 comprises a housing 3, which is an injection molded, high-density plastic case. In a preferred embodiment, the housing 3 is splash-resistant so that components are not affected by any liquids sprayed on splashed on to the housing 3.

### Lighting

Referring to Figure 1, the system comprises a substantially cuboidal shape with one truncated edge on which are positioned an array of LEDS 7a to form a diffused multi-angle reflective uplighting array 7.

The LEDS 7a comprises a first set of white light LEDs to emit white light having a wavelength of between about 420nm to about 750nm to emit radiation comparable to daylight to ensure clear visibility for both the veterinary practitioner and the animal patient. A second set of red LEDs emit red light having a wavelength of between about 622nm to about 780nm. A third set of blue/ultra-violet LEDs emit blue/ultra-violet light in a wavelength of between about 430nm to about 450nm. The white, red, and blue LEDs 7a are arranged in a recess along the diffused multi-angle reflective uplighting array.

Adjacent to the end of the truncated edge 5 on a first end panel 9 is positioned an adjustment mechanism 11 for adjustment of the emission angle of the diffused multi-angle reflective uplighting array 7. The angle of the uplighting array 7 is horizontally adjusted according to the enclosure to which the veterinary environment control system 1 is attached. In use, when an animal enclosure, to which the veterinary environment control system 1 is attached, has an upper interior face that is reflective, the adjustment mechanism 11 is used to direct the uplighting array 7 so that light is reflected into the animal enclosure. In use, when an animal enclosure, to which the veterinary environment control system 1 is attached, has an upper interior face that is non-reflective, the adjustment mechanism 11 is used to direct the uplighting array 7 horizontally to project light into the enclosure. The uplighting array 7 is diffused to eliminate glare.

It is understood that in the context of the present invention, "horizontal" means in a direction substantially parallel to the floor on which the veterinary enclosure is positioned and "vertical" means in a direction substantially perpendicular to the floor and substantially parallel to the walls of the building housing the system.

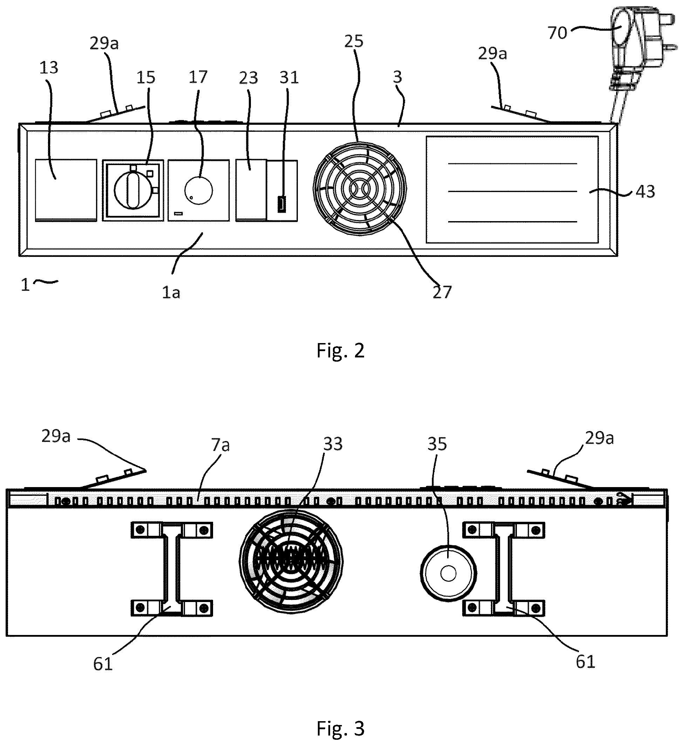

Referring to Figure 2, the veterinary environment control system 1 further includes a lighting control 13 that has an on-off and a dimmer function. The lighting control 13 can be pressed once to turn the lighting on or off and is pressed for a greater period of time to increase or decrease (dim) the light intensity.

The veterinary environment control system 1 further comprises a light mode selector 15. In the embodiment shown, the light mode selector 15 is a dial that is rotated to select the required light mode (white, red, blue/ultra-violet), but it is understood that alternative configurations for selection can be used. In use, the veterinary practitioner manually selects the required light source 7a according to their knowledge of the condition and the needs of the animal patient with only one of each light colour used at any one time. The white light LEDs are switched on for use during daylight hours to help stimulate production of the hormone, cortisol, so that the animal patient can regulate their body clock even if natural daylight is not available. The red light LEDs are switched on to view the animal patient in recovery without disturbance to their rest. The veterinary practitioner can monitor the animal to check their recovery, but the animal patient will not be aware of the red light. The blue light LEDs are switched on for inspection of the interior of the housing. The blue light highlights light organic waste because the blue light reflects from the material, including faeces, urine, blood, mucus, and other bodily fluids within the veterinary housing. The veterinary practitioner can then clean and sterilise any contaminated areas.

### Heating

Referring to Figures 1a and 2, the forward-facing panel of the veterinary environment control system 1 further includes a heating control 17. In use, heating is provided by the veterinary environment control system 1 through a ceramic heat plate 19 mounted within the housing 3 of the control system 1. The ceramic heat plate 19 can be pre-set to a desired temperature and has an automatic cut-out safety feature to prevent over-heating. A bimetallic fuse is used t cut power in the event that the ceramic heat plate 19 overheats. The fan 25 is used to circulate hot air. As discussed further below, the fan 25 is configured to extract/suck air and blow/propel air to heat or cool the enclosure to which the veterinary environment control system 1 is attached.

In alternative embodiments, infra-red radiation is emitted from an infra-red heat lamp. Optionally, the temperature within an enclosure (not shown) is monitored by the veterinary environment control system using a thermostatic sensor (not shown) so that a user can manually control the infra-red heat lamp or to allow for automatic control of the infra-red heat lamp to heat the enclosure (not shown) to an optimum temperature.

### Ventilation

Referring to Figures 1a and 2, ventilation is provided and controlled by the veterinary environment control system 1. An air circulation flow on/off switch 23 on the forward-facing panel 1a of the veterinary environment control system 1 is used to turn on the ceramic heat plate 19 and also to control a fan 25. The fan 25 circulates cool or warm air flow into an enclosure (not shown) to which the control system 1 is attached. The fan 25 circulates warm air generated by the ceramic heat plate 19 mounted within the housing 3. The 50W ceramic heat plate has a safety cut-out to prevent heating of the plate if the fan 25 fails. The fan 25 is an ultra-low noise, brushless, rotary fan. The fan 25 can extract/suck air and blow/propel air to heat or cool the enclosure to which the veterinary environment control system 1 is attached.

The heating control 17 is a rotary variable resistor with an on/off position that is also used to control the fan 25. In use, rotating the dial clockwise activates the air circulation fan 25 and also controls the speed of the fan to vary air flow within the veterinary enclosure to which the control system 1 is attached. Rotating the fan control 17 anticlockwise will turn the air circulation fan 25 off. It is not possible to vary the speed of the fan 25 when the air circulation flow is switched on to heat the ceramic heat plate. When the ceramic heat plate 19 is switched on to heat the animal enclosure, the fan speed is pre-set.

The fan 25 is covered by a front safety grill 27 positioned on the outward face of the control system 1 and by a rear safety grill 33 on the inward face of the control system 1.

Referring to Figures 1 and 2, further optional features of the veterinary environment control system 1 include a left-side mains power outlet 29 and a right-side mains power outlet 29 on the upper face of the housing 3, which can be used to power further accessories external to the housing; for example, an infusion pump or a charging device for a mobile 'phone. Each mains power outlet 29 further comprises a rubber cover 29a to prevent contaminants/moisture entering the power outlet. In one embodiment, the mains power outlet is positioned on an upper face of the control system 1 for easy access and to minimise the risk of any power leads obstructing the opening to the enclosure. In alternative embodiments, the system 1 does not include a mains power outlet. The forward-facing panel 1a of the veterinary environment control system also comprises a USB power outlet 31 for charging of mobile devices.

The veterinary environment control system 1 further includes a MicroSD card slot 30 with a rubber cover and a loudspeaker 35. As shown in Figure 1, the MicroSD card slot is positioned on an upper face of the control system 1 for easy access and the loudspeaker 35 is on an inward facing surface to emit sound into the housing (not shown) to which the veterinary environment control system 1 is attached. In use, the loudspeaker 35 can be automatically controlled or can be manually controlled using loudspeaker control inputs 37, which include volume selections. The loudspeaker 35 further includes Bluetooth and/or Wi-Fi connectivity. In some embodiments, the loudspeaker 35 comprises a timer so that sound played through the loudspeaker can be controlled according to the needs of the animal patient. For example, the veterinary environment control system 1 can use the loudspeaker 35 to automatically play ambient music at a pre-determined time to wake up the animal patient.

Referring to Figure 2, the veterinary environment control system 1 also has a backlit whiteboard 43, which is used to record information about the animal patient and can be wiped clean to remove information stored thereon. The whiteboard is backlit to allow information displayed on the whiteboard to be viewed even in a dark room.

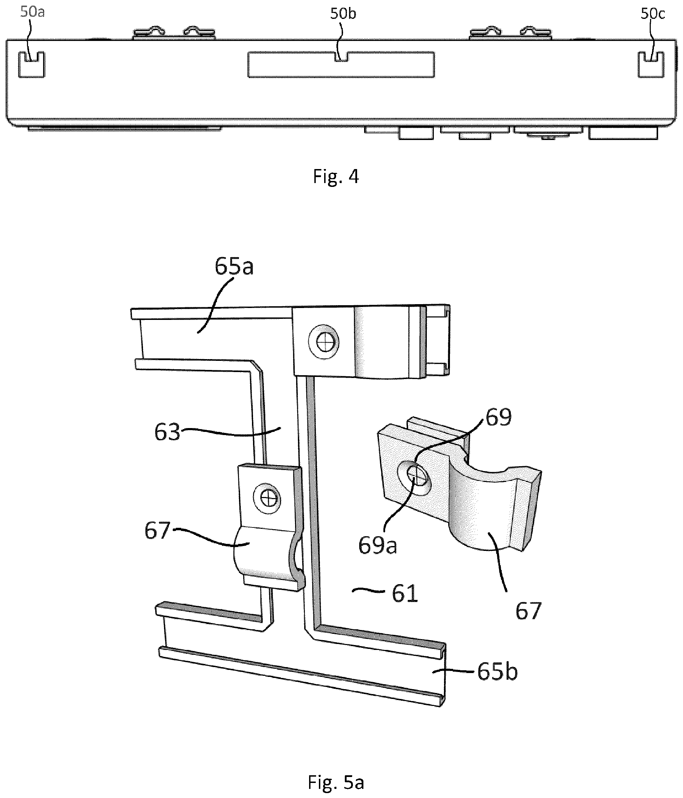

Referring to Figure 4, which shows a view from below, the veterinary environment control system 1 further comprises multi-purpose hooks 50a, 50b, 50c. If required, a blackout curtain (not shown) can be attached to a hook or pair of hooks 51a, 50b, 50c to hang over the front of a housing to which the system is attached. Further accessories, such as clipboards can also be conveniently attached to a multi-purpose hook 50a, 50b, 50c.

Referring to Figure 1, the upper panel of the control system 1 further comprises receiving means 51, for example in the form of a cylindrical recess, for a detachable vertical support (not shown). In use, the vertical support is used to hold an IV fluid bag at a height above the housing 3 and so above an animal patient housed therein.

### Attachment Mechanism

Referring to Figures 3, 5 and 7, the attachment mechanism to secure the veterinary environment control system 1 of the present invention to an existing cage door 60 is shown. The attachment mechanism allows the veterinary environment control system 1 to be attached to a variety of existing cage doors and is not limited to a particular shape or size of bar and is easily adjusted to fit to different vertical and horizontal placement of bars. For example, the present invention is well-suited to a standard bar diameter of between about 5mm and 10mm.

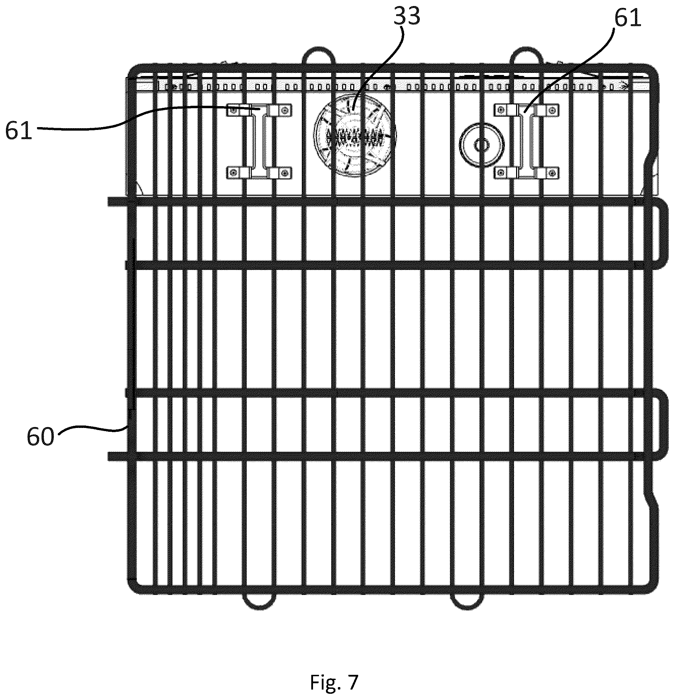

Referring to Figure 3, on the rear wall of the housing 3 of the veterinary environment control system 1 there are two mounting brackets 61. In the embodiment shown, two mounting brackets 61 are provided but it is understood that the control system can be secured to a cage or any veterinary enclosure by one or more mounting brackets 61. As shown in Figure 7, the mounting brackets 61 are configured to securely fix the control system to the cage door 60 without restricting movement of the cage door 60 to permit access to the inside of the cage/enclosure. Furthermore, the control system 1 is fixed to the cage without any components being accessible to an animal patient housed within the cage.

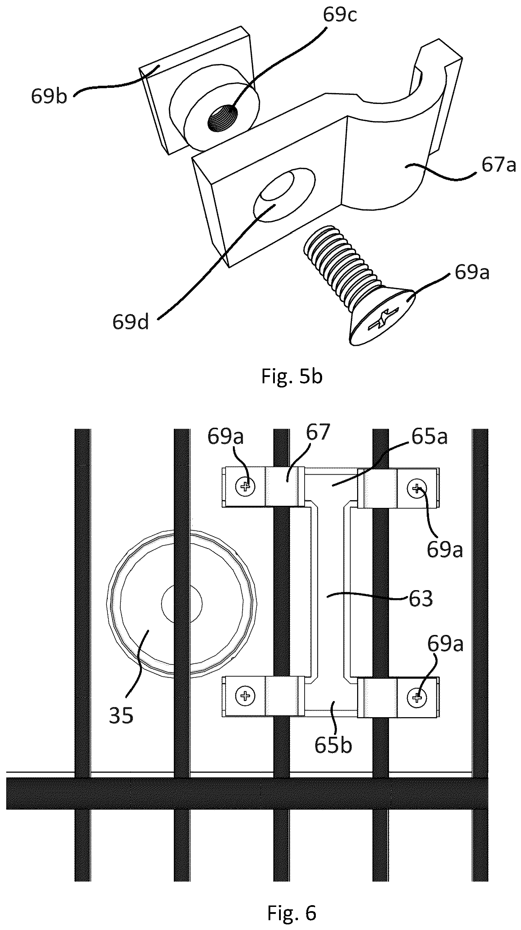

Referring to Figure 6, each mounting bracket 61 comprises an "I" shaped configuration with a central longitudinal bar 63 having transverse top bar 65a and transverse base bar 65b that are substantially perpendicular to the central longitudinal bar 63. The central longitudinal bar 63 provides for horizontal and vertical movement of the slidable, rotatable clamps 67, which are able to slide along the central longitudinal bar 63 and across the transverse top and base bars 65a, 65b. In the embodiment shown in Figure 7, there are four rotatable clamps 67 provided for each mounting bracket. As shown in Figure 5a and Figure 5b, each rotatable clamp comprises a curved surface or arch member 67a.

As shown in Figures 5a and 5b, the slidable clamp 67 is rotatable around a pivot provided by a threaded fixing screw 69a. As shown in Figure 5b, the slidable clamp 67 comprises a pair of plates 69b, 69d with a first outward facing plate 69d and a second back plate 69b, which is positioned in a channel of the bracket 61 so that the back plate 69d can slide along the channel. The threaded fixing screw 69a passes through an aperture in the outward facing plate 69d and is received in a protruding threaded aperture 69c in the back plate 69b. The back plate 69b allows the clamp 67 to slide along the bracket 61 to the required position and the fixing screw 69a is then tightened to hold the clamp 67 in place. To adjust the clamp 67, the fixing screw 69a can be loosened to allow movement of the clamp 67.

The or each rotatable clamp 67 is rotatable through 360 degrees about the fixing screw 69a. The arch member 67a is resilient to "clip-fit" against the bars of a cage. In use, to fix the veterinary environment control system 1 to the bars of a cage door 60, the control system 1 is held to the outside of the cage door 60 so that the bars of the cage are aligned to have a first bar positioned to one side of the central longitudinal bar 63 of the mounting bracket 61 and a second adjacent bar is positioned to the opposite side of the central longitudinal bar 63. The rotatable brackets 67 can then slide along the bar of the cage to the required position before the resilient arch member 67a of each rotatable clamps 67 is fitted around a bar and is fixed thereto by tightening of the fixing screw 69a.

Referring to Figure 2, the veterinary environment control system 1 has a 2-3m 13A mains power cord that allows the entire system 1 to be powered through a single connection.

As shown in Figure 7, with the rotatable clamps 67 fixed to the respective mounting bracket 61, the veterinary environment control system 1 is fixed securely to the cage door 60 to provide one or more of the following, as shown in Figures 1 and 2:
i) adjustable lighting to the interior of the cage via the diffused multi-angle reflective uplighting array 7;
ii) adjustable heating to the interior of the cage via the ceramic heat plate 19;
iii) adjustable sound to the interior of the cage via the speaker 35; and/or
iv) adjustable ventilation to the interior of the cage via the fan 25.

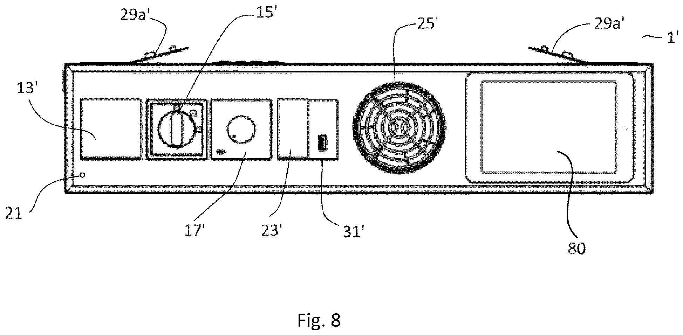

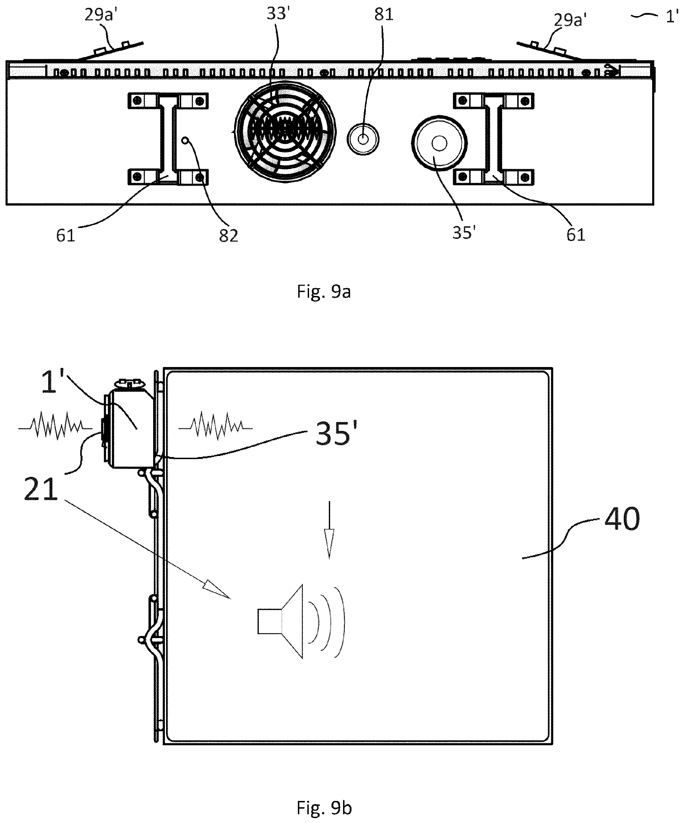

As shown in Figures 8 and 9a, in an alternative embodiment of the present invention, the veterinary environment control system 1' comprises the fan 25' and safety grills 27', 33' described previously, in addition to the control and connection features of a lighting control 13', a light mode selector 15', a heating control 17', air circulation switch 23' and a USB power outlet 31'. The system 1' further comprises a touch screen display 80. The touch screen display 80 is used to both input and display data. For example, the display 80 allows the integration of the control system 1' with veterinary practice software to display patient details, including planned treatment, medications required etc. It is also envisaged that the touch screen display could allow for remote access to the control system by a pet owner. The veterinary environment control system can further comprise a holder for a mobile computing device. In further embodiments, the veterinary environment control system comprises a holder for holding a mobile computing device such as a smartphone, tablet, or another handheld device.

Referring to Figures 8, 9a and 9b, the veterinary environment control system 1' comprises a front-facing, external microphone 21 to detect sound levels external to an enclosure 40 and an internal, rear-facing microphone 82 to detect sound emitted from within an enclosure 40. That is, the present invention is configured to monitor both internal and external sounds levels for the enclosure to which the veterinary environment control system 1' is attached. Sound detection allows for manual or automatic response to sounds from within the enclosure. For example, by detecting sounds from within the enclosure, a veterinary practitioner may derive that the animal patient is restless because they are emitting loud noises or are moving excessively. In response, soothing music or sounds can be played into the enclosure through the speaker 35' to foster security and calm the animal patient.

Referring to Figure 9b, a schematic of the response of the veterinary environment control system 1' to both external and internal noise levels is shown. The front-facing (external) microphone 21 detects when sounds levels external to the enclosure 40 exceed about 50 decibels. In response to this a trigger is activated so that the veterinary environment control system 1' will play calming music via the speaker 35' into the enclosure. This will allow the system 1' to automatically play calming music or sounds to help soothe an animal patient and prevent unnecessary stress caused by high noise levels. Automatic playback triggered by external noise levels (detected by the front-facing microphone 21) is in addition or as an alternative to automatic playback triggered by internal noise levels (detected by the internal, rear-facing microphone 82).

Referring to Figure 9b, the automatic playback feature of the veterinary environment control system 1' can be achieved using data processing capabilities provided by a mobile computing device (not shown) secured within a holder or by control software integrated into the veterinary environment control system 1'.

In the alternative embodiment of the present invention, the control system 1' further comprises a monitoring camera 81 that faces inwardly into the enclosure to monitor animal movement and raise an alarm to the veterinary practitioner when intervention is required. For example, if the camera 81 detects restlessness or excessive movement, then the animal patient may require attention or further medication. The veterinary environment control system 1' analyses and processes data that is collected in real time and can generate an alert in the event of detection of lack of motion, erratic movement, or movements consistent with the animal patient being in pain. The camera 81 can also be used to detect contamination of the enclosure if the animal patient urinates or defecates. It is envisaged that the camera and data processing capabilities of the control system could use artificial intelligence/machine learning to further detect and report data on the animal patient's condition; for example, if the animal is in pain or has not moved as expected. Furthermore, the camera 81 may be used to detect changes in temperature or respiration of the animal patient.

Data collected using the monitoring camera 81 is used in addition or in combination with data collected using the microphone 82 that also collects real time data useful in monitoring animal condition. For example, sound picked up by the microphone 82 can indicate if the animal is moving excessively or showing signs of stress. It is also envisaged that the microphone 82 has a dictation function to allow a user to dictate patient notes to be detected and processed to store as text on a patient's medical records.

The present invention provides a veterinary environment control method comprising the steps of:
i) receiving and analysing data from sensors positioned in a veterinary enclosure for an animal such as a small mammal;
ii) identifying changes in any one or more of sound and/or lighting and/or air flow within the veterinary enclosure;
iii) reporting changes and recommending a solution to an automated veterinary environment control system for supply of any one or more of heating and/or lighting and/or ventilation to the veterinary enclosure.

In the embodiments shown in Figures 8 and 9a, the veterinary environment control system comprises additional data processing capabilities, including:
a) automatic visual detection of a patient to confirm identity;
b) management of bookings for space within the veterinary practice;
c) workflow management, including cost tracking and billing to improve operational efficiency.

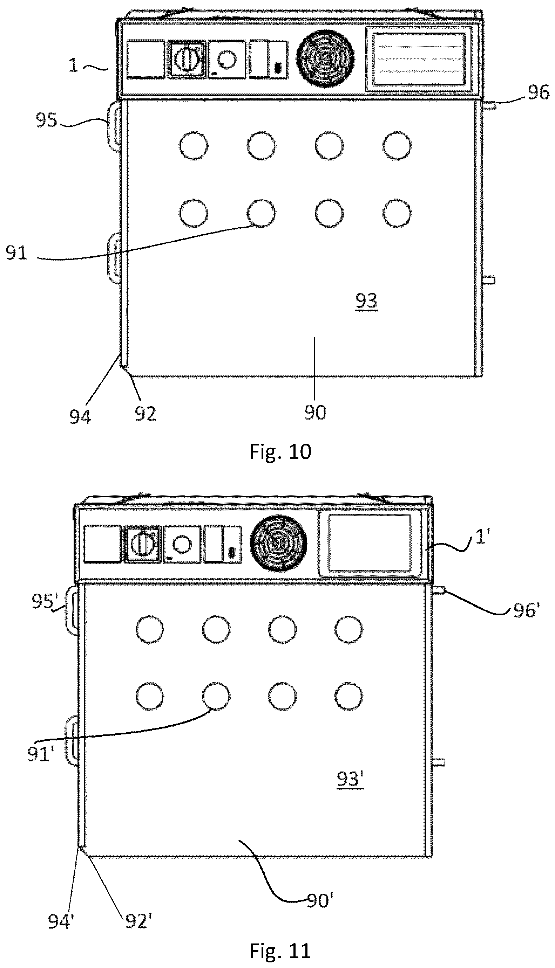

In an alternative embodiment of the present invention shown in Figures 10 and 11, the veterinary environment control system of the present invention is fixed to a replacement toughened safety glass door 90, 90'. The glass door 90 has a thickness of 8mm and is a toughened safety glass door that comprises a plurality of ventilation apertures 91, 91'. The base, rear and side walls of the cage are maintained, and the front metal grill of a cage is replaced with a glass door 90, 90' to which the veterinary environment control system 1 is attached. The components of the system remain identical to those previously described, whilst the glass front door 90, 90' provides additional advantages to the enclosure, such as noise reduction and improvements in hygiene. The glass door 90, 90' has at least one truncated corner 92, 92'. In use this provides a triangular opening through which an IV line can be passed into the animal enclosure 93, 93'. A first lateral side of the glass door 90, 90' comprises a stainless-steel channel with hinge loops 95, 95'. A second lateral side of the glass door 90, 90' comprises a stainless-steel channel with latches 96, 96'. The cage door (not shown) is removed from the enclosure by unscrewing the existing hinges. If the existing hinges can be attached to the glass door 90, 90' using the hinge loops 95, 95' this allows the glass door to be fixed to the front of the cage. Alternatively, the glass door 90, 90' is supplied with hinges that are attached to the original cage hinge positions with existing or replacement fixings.

The above-described embodiment has been given by way of example only, and the skilled reader will naturally appreciate that many variations could be made thereto without departing from the scope of the claims.

## Claims

1. A removable veterinary environment control system for a veterinary enclosure for an animal comprising one or more of:
- at least one heating means;
- at least one heating control for controlling the temperature within an animal housing;
- at least one lighting means;
- at least one lighting control for controlling the light emitted within an animal housing;
- at least one ventilation means; and
- at least one ventilation control for controlling the ventilation within an animal housing;
wherein the removable veterinary environmental control system comprises a self-contained panel comprising at least one removable connector to connect the system to a veterinary enclosure and a power input to receive power to the panel and electrical components contained therein.

2. A removable veterinary environment control system for a veterinary enclosure according to claim 1 wherein:
i) the or each heating means comprises a ceramic heated plate; and/or
ii) the or each lighting means comprises a plurality of LEDs; and/or
iii) the or each lighting means further comprises a movement mechanism for adjustment of the angle of emission of the or each lighting means; and/or
iv) the or each ventilation means comprises at least one fan.

3. A removable veterinary environment control system for a veterinary enclosure according to any preceding claim further comprising:
v) at least one loudspeaker; and/or
vi) a timer; and/or
vii) at least one microphone.

4. A removable veterinary environment control system for a veterinary enclosure according to any preceding claim wherein the or each removable connector comprises a clamp.

5. A removable veterinary environment control system for a veterinary enclosure according to claim 4 wherein the or each removable connector comprises a slidable and/or a rotatable clamp.

6. A removable veterinary environment control system for a veterinary enclosure according to claim 5 wherein the or each removable connector comprises a clamp rotatable through 360 degrees.

7. A removable veterinary environment control system for a veterinary enclosure according to any preceding claim wherein the or each removable connector comprises a clamp comprising at least one resilient arched member, wherein the arched member is resiliently biased to a closed position.

8. A removable veterinary environment control system for a veterinary enclosure according to any preceding claim wherein the or each removable connector comprises a mounting bracket having at least one receiving channel in which is positioned a slidable clamp.

9. A removable veterinary environment control system for a veterinary enclosure according to any preceding claim wherein the or removable connector comprises an I-shaped mounting bracket having a first longitudinal channel, a transverse base channel and a transverse upper channel.

10. A removable veterinary environment control system for a veterinary enclosure according to any preceding claim further comprising at least one power outlet and/or comprising a plastic case and/or further comprising a blackout curtain.

11. A removable veterinary environment control system for a veterinary enclosure according to any preceding claim further comprising at least one recess; and/or at least one attachment member for attaching a veterinary accessory preferably, wherein the or each attachment member comprises at least one hook.

12. A removable veterinary environment control system for a veterinary enclosure according to any preceding claim further comprising:
a) a plurality of attachment members; and/or
b) at least two hooks; and/or
c) at least one wipe-clean board; preferably, wherein the or each wipe-clean board further comprises a light.

13. A removable connector comprising:
- at least one bracket having channels therein;
- at least one slidable clamp positioned with a channel of a bracket;
- wherein the slidable clamp is slidable along a channel in the bracket; and
- wherein the slidable clamp is rotatable.

14. A removable connector according to claim 13 wherein:
- the or each slidable clamp comprises a first outward facing plate and a second back plate, wherein the back plate is positioned in a channel of the bracket;
- the first and second plates are held together by a threaded screw about which the clamp can rotate; and
- the or each slidable clamp comprises at least one arched member wherein the or each arched member is resiliently biased to a closed position.
